(19) **Europäisches Patentamt**

**European Patent Office** (11) Veröffentlichungsnummer: **0 031 558**
**B1**

**Office européen des brevets**

(12) **EUROPÄISCHE PATENTSCHRIFT**

(45) Veröffentlichungstag der Patentschrift: (51) Int. Cl.⁴: **F 23 G 5/00,** F 23 G 7/00,
**18.12.85** **C 02 F 11/00**

(21) Anmeldenummer: **80108044.1**

(22) Anmeldetag: **19.12.80**

(54) **Müllverbrennungsanlage.**

(30) Priorität: **21.12.79 DE 2951620** (73) Patentinhaber: **Schäfer, Thomas, Bonnemühle,**
**D-6234 Hattersheim 3 (DE)**
Patentinhaber: **Schäfer, Winfried, Bonnemühle,**
(43) Veröffentlichungstag der Anmeldung: **D-6234 Hattersheim 3 (DE)**
**08.07.81 Patentblatt 81/27**

(72) Erfinder: **Schäfer, Thomas, Bonnemühle,**
**D-6234 Hattersheim 3 (DE)**
(45) Bekanntmachung des Hinweises auf die Patenterteilung: Erfinder: **Schäfer, Winfried, Bonnemühle,**
**18.12.85 Patentblatt 85/51** **D-6234 Hattersheim 3 (DE)**

(84) Benannte Vertragsstaaten: (74) Vertreter: **Blumbach Weser Bergen Kramer Zwirner**
**AT BE CH DE FR LI NL** **Hoffmann Patentanwälte, Sonnenbergerstrasse 43,**
**'D-6200 Wiesbaden 1 (DE)**

(56) Entgegenhaltungen:
**CH - A - 555 786**
**DE - A - 1 526 113**
**US - A - 3 918 374**
**US - A - 3 985 086**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf eine Müllverbrennungsanlage unter Rückführung der anfallenden Energie.

Die Rückführung der anfallenden Energie in Müllverbrennungsanlagen ist an sich bekannt (DE-A-1 526 113). Dabei werden mindestens zwei Kessel angewendet, wovon der eine als Hochdruckkessel ausgebildet ist und mit fossilen Brennstoffen zur Überhitzung betrieben wird. Eine sonstige Anpassung an die Verbrennung von Müll ist nicht offenbart.

Bei einer weiteren bekannten Müllverbrennungsanlage (US-A-3 918 374) sind hintereinandergeschaltete Öfen vorgesehen, die wenigstens teilweise zur Erzeugung von Schwelgas durch Pyrolyse ausgebildet sind und teilweise durch Sauerstoff betrieben werden. Die Verwendung von Sauerstoff für den Normalbetrieb ist ziemlich teuer.

Gebaute Müllverbrennungsanlagen enthalten üblicherweise einen Rost oder Wanderrost, auf dem der Müll grossflächig verbrennt. Die Feuerraumtemperatur soll 1050 °C nicht überschreiten, weil andernfalls die Schlackenbeseitigung erschwert wäre. Andererseits soll die Feuerraumtemperatur 900 °C nicht unterschreiten, weil sonst die restlose Verbrennung gefährdet wäre. Es wird deshalb etwa 950 °C eingehalten, was jedoch bei einem relativ grossen Feuerraum, wie bei einem Rost vorausgesetzt, schwierig ist, weil die Müllzusammensetzung schwankt.

Der Erfindung liegt die Aufgabe zugrunde, eine Müllverbrennungsanlage zu schaffen, in welcher eine vollständige Verbrennung des Mülls erzielt und die nicht brennbaren Bestandteile sicher in flüssige Schlacke überführt werden können.

Die Lösung dieser Aufgabe ergibt sich aus der Lehre des Anspruches 1.

Die Rückführung der anfallenden Energie erfolgt dabei über einen Wärmetauscher und über eine Trocknungsstufe des Rohmulls. Der Wärmetauscher kann zum Betrieb einer Turbine führen, mit welcher ein Kompressor zur Förderung von erwärmter Luft betrieben wird. Es kann auch eine Kältemaschine angetrieben werden, wenn es darum geht, vorgetrockneten Müll geruchfrei und damit besser lagerfähig zu machen.

Die im Schlackenbad anfallende flüssige Schlacke wird bei Bedarf abgeleitet. Zur Ergänzung oder zur Förderung der Verflüssigung können dem Schlackenbad Zuschläge zugesetzt werden. Die so verflüssigten unbrennbaren Müllrückstände können nach ihrer Ableitung aus dem Schalenbrenner, der den Gegenstand des EP-A-0 097 976 (Anmeldung 83 107 173.3) bildet, direkt zu hochofenschlackenartigen Produkten, wie Splitt, Pflastersteinen, geschäumter Schlacke oder Schlackenwolle verarbeitet werden.

Innerhalb der Vorrichtung erfolgt der Mülltransport vorzugsweise über Rohre oder Kanäle mit Hilfe von Stösseln oder Förderschnecken, die das System von Aussenluft trennen und bei Verdichtung des Mülls als Rückstaufilter wirken und die Zugabe von gasförmigen oder flüssigen Zusatzbrennstoffen wie Altöl ermöglichen. Wird beispielsweise eine Trommel mit Aussenschnecke bei der Mülltrocknung verwendet, dann kann gelockerter Müll als Adhäsionsfilter der abzuführenden Rauchgase dienen.

Die Möglichkeit des Zusetzens von Altöl im Bereich des Schalenbrenners ist nicht nur wegen der Energiebilanz vorteilhaft, sondern auch wegen der Umweltgifte im Altöl, die, soweit sie nicht verbrennen, von der Schlacke aufgenommen und gebunden werden.

Nachstehend werden zwei Ausführungsbeispiele der Erfindung unter Bezugnahme auf die Zeichnung näher erläutert. Darin zeigen:

Fig. 1 eine erste Müllverbrennungsanlage und

Fig. 2 eine zweite Müllverbrennungsanlage.

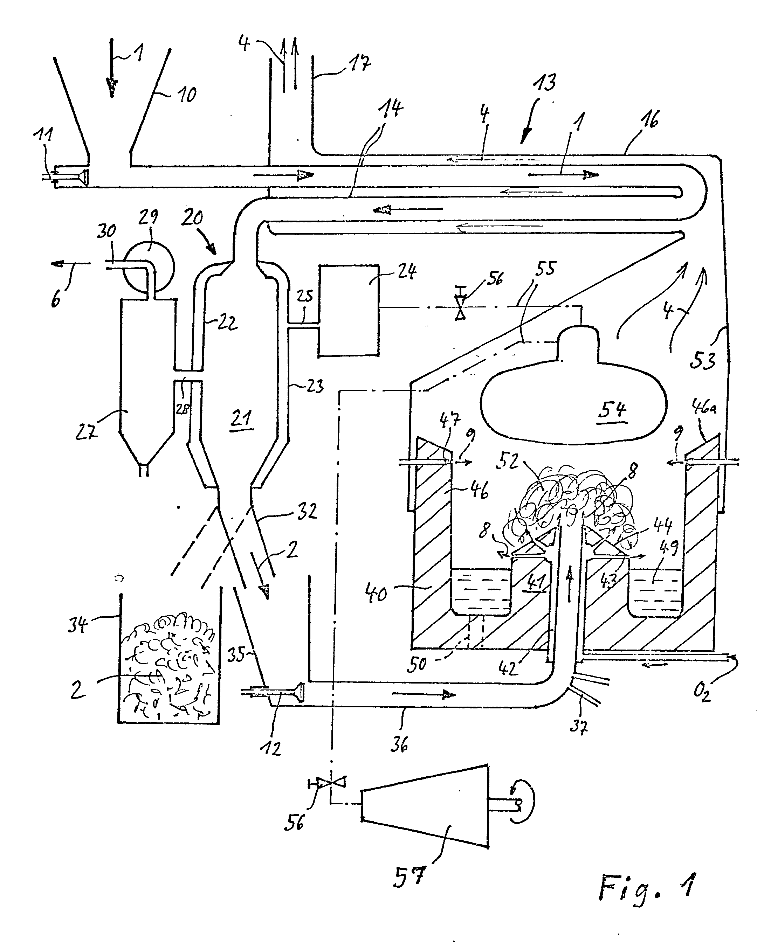

Die in Fig. 1 schematisch dargestellte Anlage zur Verwertung von Müll ermöglicht die fortlaufende Umwandlung von Rohmüll in verwertbare Wärmeenergie und verwertbare Schlacke. Der in einen Einfülltrichter 10 von oben her zugeführte Rohmüll 1 wird von einem Förderstössel 11 (oder einer Förderschnecke) durch einen rohrförmigen Vortrocknungskanal 14 einer Vortrocknungsstufe 13 bewegt und fällt am Ende des Vortrocknungskanals von oben her in einen doppelwandigen Kühltrocknungsbehälter 21 einer Kühltrocknungsstufe 20. Der Vortrocknungskanal 14 ist im Inneren einer Rauchgasführung 16 angeordnet; es wird also die Niedertemperatur-Energie des Müllverbrennungsofens verwertet. Die ausgenutzten Rauchgase 4 werden anschliessend durch eine Esse 17 abgeleitet.

Der im Innern des Kühltrocknungsbehälters 21 befindliche, vorgetrocknete Müll wird durch ein Kältemittel gekühlt, welches sich zwischen einer Innenwand 22 und einer Aussenwand 23 des Behälters 21 befindet und über Leitungen mit einer Kältemaschine 24 in Verbindung steht. Im Innern des Kühltrocknungsbehälters 21 herrscht ein Unterdruck, erzeugt über einen Absaugkanal 28, der mit einem Absaugbehälter 27 verbunden ist, an den eine Saugpumpe 29 angeschlossen ist. Die im Müll vorhandenen Geruchsstoffe 6 werden über eine Abführleitung 30 abgeleitet.

Über einen eine Weiche bildenden, umschaltbaren Stutzen 32 kann der getrocknete und entgaste Müll aus der Kühltrocknungsstufe 20 wahlweise in einen Speicher 34 oder in einen Trichter 35 eines zum Müllverbrennungsofen führende Förderkanals 36 geschüttet werden.

Ein Förderstössel 12 bewegt den getrockneten Müll 2 durch den Förderkanal 36 in den Müllverbrennungsofen, der bei der erfindungsgemässen Vorrichtung ein aus feuerfesten Steinen hergestellter, ringförmiger Schalenbrenner 40 ist. Der Brenner bildet den Gegenstand des EP-A-0 097 976 (Anmeldung 83 107 173.3) und ist dort näher beschrieben.

Der Förderkanal 36 mündet senkrecht und von unten her in einen pilzförmigen Brennerkopf 41 mit einer nach aussen und unten abfallenden konischen Mantelfläche 44. Ein Sauerstoffkanal 42 steht in Verbindung mit Düsen 43 zur Abgabe von Sauerstoff in eine über dem Brennerkopf 41 angeordnete Verbrennungszone 52. Zwischen dem
pilzförmigen Brennerkopf 41 und einer beispielsweise zylindrischen Aussenwand 46 des Schalenbrenners 40 befindet sich ein Schlackenbad 49, an
das ein Ableitungskanal 50 für flüssige Schlacke
angeschlossen ist.

Die Aussenwand 46 des Schalenbrenners 40
besitzt eine nach innen abgeschrägte Oberseite
46a, unterhalb welcher Düsen 47 in die Brennkammer einmünden. Damit wird Luft 9, gegebenenfalls
mit Sauerstoff angereicherte, in die Verbrennungszone 52 abgegeben.

Der oben offene Schalenbrenner 40 ist mit einer
Haube 53 abgedeckt, welche die Rauchgase 4 an
einem als Verdampfer 54 ausgebildeten Wärmetauscher vorbei zu der Rauchgasführung 16 der
Vortrocknungsstufe 13 leitet.

In dem Verdampfer 54 erzeugter Dampf wird
über Dampfleitungen 55, in denen sich Ventile 56
befinden, zur Kältemaschine 24 und in eine Turbine 57 geleitet.

Es wird Rohmüll 1 mit relativ hohem Wassergehalt, wie er gewöhnlich von kommunalen Müllabfuhrunternehmen angeliefert wird, in den Einfülltrichter 10 gefüllt und mit Hilfe des Förderstössels
11 durch die Vortrocknungsstufe 13 bewegt und
darin durch die Rauchgase 4 vorgetrocknet. Der
vorgetrocknete Müll 2 fällt in den Behälter 21 der
Kühltrocknungsstufe 20, in welcher Unterdruck
herrscht. Hierdurch werden Geruchsstoffe entzogen und über den Absaugbehälter 27, die Saugpumpe 29 und die Abführleitung 30 abgeleitet,
sowie Wasserdampf niedergeschlagen und abgetrennt.

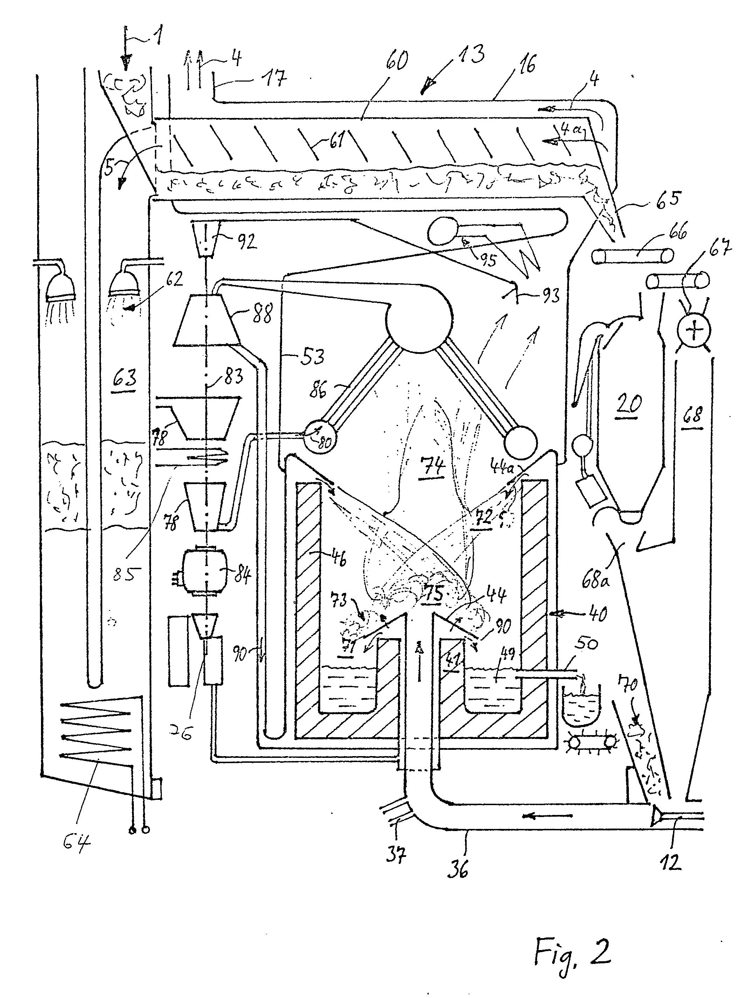

Im Zuge des kontinuierlich ablaufenden Verfahrens wird der vorgetrocknete Müll 2 aus dem unteren Teil des Kühltrocknungsbehälters 21 mittels
eines umschaltbaren Stutzens 32 bedarfsweise
entweder in einen Speicher 34 oder einen Trichter
35 eines weiterführenden Förderkanals 36 geschüttet. In diesem wird der getrocknete Müll 2
durch einen Förderstössel 12 (oder gegebenenfalls eine Förderschnecke) kontinuierlich direkt in
die Verbrennungszone 52 im Innern des Schalenbrenners 40 transportiert, wo sich auf dem pilzförmigen Brennerkopf 41 ein Müllkegel 73 (Fig. 2)
bildet. Falls erforderlich, tritt aus den Düsen 43
des Brennerkopfes 41 und den Düsen 47 der Brenneraussenwand 46 Luft, gegebenenfalls mit
Sauerstoff angereicherte Luft 9 in die Verbrennungszone 52 aus. Es geht um eine sehr hohe
Verbrennungstemperatur zwischen 1100 und etwa
1600 °C, die man im Notfall durch die Sauerstoffzufuhr erzielt. Die besondere Form des Schalenbrenners begünstigt die hohe Temperatur in der
Verbrennungszone, weil die Wärme von den Wänden des Schalenbrenners rückstrahlt und die bei
47 zugeführte Luft aufgeheizt wird und diese Wärme in die Verbrennungszone 52 einträgt. Auch der
darüber angeordnete Verdampfer 54 strahlt Wärme zurück. Bei der erzeugten hohen Verbrennungstemperatur tritt in dem Müllkegel oberhalb
des Brennerkopfes 41 Pyrolyse auf. Unbrennbare
Rückstände verflüssigen und fliessen in das den Brennerkopf 41 umgebende Schlackenbad 49 ab.

Gegebenenfalls können Zuschlagstoffe zugesetzt werden, um ein leichtflüssiges Schlackenbad
49 und gewisse Materialeigenschaften zu erzielen, die bei Produkten, wie Splitt, Pflastersteine,
geschäumte Schlacke oder Schlackenwolle, wertvoll sind.

Es ist vorgesehen, dem getrockneten Müll 2
beispielsweise im Bereich des Förderkanals 36
über geeignete Einführkanäle 37 flüssige oder
gasförmige Brenn- oder Zuschlagstoffe wie Altöl
zuzusetzen. Darin enthaltene Stoffe gehen z.T. in
die abgeleitete Schlacke.

Der durch die intensive Müllverbrennung erzeugte Dampf kann vielfach ausgenutzt werden,
z.B. für die Aggregate der Anlage (die Kältemaschine 24, die Turbine 57). Ferner besteht die
Möglichkeit, den so erzeugten Dampf zu Heizzwecken heranzuziehen.

Das in Fig. 2 dargestellte abgewandelte Ausführungsbeispiel der Müllverbrennungsanlage besitzt teilweise gleiche oder ähnliche Einrichtungen wie das in Fig. 1 dargestellte Ausführungsbeispiel, die daher die gleichen Bezugszahlen
tragen.

Der feuchte Rohmüll 1 gelangt über einen gassperrenden Einfülltrichter 10 in eine mit einer Aussenförderschnecke 61 versehenen Drehtrommel
60, die sich innerhalb der Rauchgasführung 16 des
Schalenbrenners 40 befindet und durch die
Rauchgase 4 entweder indirekt oder direkt beheizt
wird. Am Ende der Drehtrommel 60 tritt das im
Rohmüll 1 enthaltene Wasser als Abdampf 5 aus
und wird innerhalb eines Abdampfungskanals 63
wahlweise einem Wäscher 62 oder einem Kondensator zugeführt.

Im Wäscher 62 wird der Abdampf direkt kondensiert und seine Wärme über einen Wärmetauscher
64 als Fernwärme abgeführt. Bei der äusserlichen
(indirekten) Beheizung der Drehtrommel 60 bleiben Rauchgase und Müll-Wasserdampf getrennt
und können getrennt kondensiert bzw. gewaschen
werden. Der so entweder ganz oder teilweise getrocknete Müll verlässt die Drehtrommel durch
eine gassperrende Aufschüttung 65 und wird
wahlweise einer Sortierstufe 66 oder einer Mahlstufe 67 zugeführt. Gemahlener und trockener
Müll wird in einem Speicher 68 gebunkert, halbtrockener Müll in der bereits in Verbindung mit
Fig. 1 beschriebenen Kühltrocknungsstufe 20
durch Unterdruckentwässerung mit Ausfrierung
von Restwasser befreit und dann über einen Speichereinlass 68a ebenfalls gebunkert.

Die Trocknung und Beheizung erfolgen unter
weitgehendem Sauerstoffausschluss und Aussenluftabschluss, so dass jede Brandgefahr vermieden und die Umwelt nicht belastet wird.

Vom Speicher 68 wird der Müll gegebenenfalls
zusammen mit Zuschlagstoffen 70 mit dem Förderstössel 12 durch den Förderkanal 36, gegebenenfalls unter Zugabe flüssiger oder gasförmiger
Brenn- oder Zuschlagstoffe, über die Einführkanäle 37 von unten über das Steigrohr in den pilzförmigen Brennerkopf 41 des Schalenbrenners 40
gefördert. Auf der konischen Mantelfläche 44 des Brennerkopfes 41 bildet der Müll einen Ablaufkegel 73, von dem flüssige Schlacke über die konische Mantelfläche 44 des Brennerkopfes 41 in das flüssige Schlackebad 49 abfliesst. Der Ablaufkegel 73 liegt im Kern der stark rückstrahlenden heissen zylindrischen Aussenwand 46 des Schalenbrenners 40. Die Luftzufuhr 90 für den Abbrand ist in zwei Teilströme für eine untere Abbrandzone 71 und eine seitliche obere Abbrandzone 72 am oberen Ende der Aussenwand 46 unterteilt. Diese Luft kühlt allseitig die Brennerschale und führt praktisch alle von der Feuerung abgehende Wärme konzentrisch wieder auf den Abbrandkegel zurück. Diese vorgewärmte Verbrennungsluft wird beim Eintritt in die Brennerschalte durch Düsen 47 tangential schräg nach unten geführt und umkreist in der Brennerschale den Ablaufkegel 73 tangential. Es bildet sich eine schraubenförmige Flamme 74, und Rauchgase verlassen den Brennertopf nach oben. Hierbei wird die Brennerflamme 74 an der Stelle der oberen Frischluftdüsen 47 eingeschnürt und so ein fast kugelförmiger Brennraum mit höchstem Wärmerückstau gebildet.

Im Kern des Müll-Ablaufkegels 73 bildet sich unter diesem Wärmerückstau eine Pyrolysezone 75 des Brennmaterials. Die erzeugten Schwelgase zusammen mit dem verdampften Restwasser bilden mit der zugeführten Luft ein tangential kreisendes Hochtemperaturwirbelbett um den Ablaufkegel 73. Asche und Schlacke werden hierbei nach unten aussen abgeschieden und bilden das flüssige Schlackebad 49, das über den Ablauf 50 auf gleichem Niveau gehalten wird.

Um die Temperatur im Schlackebad 49 hoch genug zu halten, wird in den Luft-Teilstrom der unteren Abbrandzone 71 über dem Schlackebad je nach Brennmaterial gegebenenfalls reiner Sauerstoff oder mit Sauerstoff angereicherte Luft aus einer Belüftungsstufe 76 zugesetzt.

Mit der Flamme 74 mitgerissene Aschenteile werden aus der sich schraubenförmig nach oben drehenden Flamme 74 ausgeschieden, wenn sie nach der Einschnürung am oberen Brennermantelrand schnell an Geschwindigkeit verliert, und über die konisch ausgebildete Dachfläche 46a am Rand der Brennerwand 46 dem Schlackebad 49 zugeführt.

Ferner ist eine Gasturbine 83 mit einem Generator 84 vorhanden, die mittels eines Verdichtersatzes 78 mit Zwischenkühler 85 Luft 80 durch einen im Brennraum des Schalenbrenners 40 angeordneten Wärmetauscher 86 in eine Turbine 88 leitet, wo sie entspannt und anschliessend dem Brennertopf als vorgewärmte Brennluft 90 zugeführt wird. Ferner gehört zu der Gasturbine 83 ein Verdichter 92, der an einem innerhalb des Brennraumes gelegenen Abgasaufnehmer 93 Niedertemperaturabgase 4 entnimmt und als Prozesswärmeträger verdichtet.

Die zuvor beschriebene Gasturbine 83 mit ihren Aggregaten kann auch einer Dampf-Luftanlage nachgeschaltet oder durch eine solche ersetzt werden.

**Patentansprüche**

1. Müllverbrennungsanlage unter Rückführung der anfallenden Energie, gekennzeichnet durch

A. eine Einrichtung zur Vortrocknung und Entgasung (13, 20), durch welche zunächst Wärme zugeführt wird und dann gekühlt sowie Unterdruck angelegt wird,

B. einen Schalenbrenner (40) mit folgender Ausbildung:

a) ein Müll-Förderkanal (36) für vorgetrockneten Müll tritt von unten in den Schalenbrenner (40) ein und mündet

b) in einen pilzförmigen Brennerkopf (41), der zur Auflage und weiteren Förderung des verbrennenden, einen Kegel (73) bildenden Mülls eine nach aussen und unten abfallende konische Mantelfläche (44) besitzt;

c) in der Nähe des oberen Endes der Aussenwand (46) des Schalenbrenners (40) sind Düsen (47) vorgesehen, die vorgewärmte Luft (90) tangential schräg nach unten zur Bildung eines den Müllkegel (73) umkreisenden Wirbels führen, in dessen Kern sich eine Brennerflamme (74) bildet;

d) ein Wärmetauscher (54, 86) ist oberhalb der Brennerflamme (74) angeordnet und trennt den Verbrennungsraum vom Rauchgasbereich (4);

e) der Brennerkopf (41) ist von einem ringförmigen Schlackenbad (49) umgeben;

C. eine Fördereinrichtung (11, 12) zum Bewegen von Müll von einer Einrichtung zur anderen bzw. zum Schalenbrenner (40).

2. Müllverbrennungsanlage nach Anspruch 1, dadurch gekennzeichnet, dass am Brennerkopf (41) und/oder den Aussenwänden (46) des Schalenbrenners (40) zusätzliche Düsen (43) für Sauerstoff oder mit Sauerstoff angereicherte Luft angeordnet sind.

3. Müllverbrennungsanlage nach Anspruch 1 oder 2, dadurch gekennzeichnet, dass die Aussenwand (46) des Schalenbrenners (40) an der Oberseite (46a) nach innen abgeschrägt ist.

4. Müllverbrennungsanlage nach einem der Ansprüche 1 bis 3, dadurch gekennzeichnet, dass der Wärmetauscher (54, 86) einer Kältemaschine (24) und/oder einer Turbine (88) zugeordnet ist.

5. Müllverbrennungsanlage nach einem der Ansprüche 1 bis 4, dadurch gekennzeichnet, dass die vorgewärmte Luft (90) zuvor den Wärmetauscher (86) durchströmt.

6. Müllverbrennungsanlage nach Anspruch 5, dadurch gekennzeichnet, dass dem Wärmetauscher (86) ein Verdichter (78) vorgeschaltet und eine Turbine (88) nachgeschaltet sind.

7. Müllverbrennungsanlage nach Anspruch 6, dadurch gekennzeichnet, dass die Turbine (88) unter anderem zum Betrieb des Verdichters (78) vorgesehen ist.

8. Müllverbrennungsanlage nach einem der Ansprüche 1 bis 7, dadurch gekennzeichnet, dass der Rauchgasbereich (4) und die Rohmüllzuführungszone (1, 14) als Müllvortrocknungsstufe (13) einander durchdringen, wobei das Rauchgas als Schutzgas verwendet wird.

9. Müllverbrennungsanlage nach einem der Ansprüche 1 bis 8, dadurch gekennzeichnet, dass eine Einrichtung (20, 62) zur Trennung von Wasserdampf und Müllgasen vorgesehen ist.

10. Müllverbrennungsanlage nach Anspruch 9, dadurch gekennzeichnet, dass eine Abkühl- und Unterdruckerzeugungseinrichtung (20) vorgesehen ist.

**Claims**

1. A refuse incineration plant with energy recycling, characterised by:
A. a pre-drying and degassing device (13, 20), by means of which heat is first supplied and then cooled and a vacuum applied,
B. a dish burner (40) having the following construction:
a) a refuse feed duct (36) for predried refuse enters the dish burner (40) from below and leads
b) into a mushroom-shaped burner head (41) which, in order to support and further convey the burning refuse forming a cone (73), has an outwardly and downwardly sloping conical outer surface (44);
c) nozzles (47) are provided near the top end of the outer wall (46) of the dish burner (40) and lead preheated air (90) tangentially downwards at an angle to form a vortex which encircles the refuse cone (73) and in the core of which a burner flame (74) forms;
d) a heat exchanger (54, 86) is disposed above the burner flame (74) and separates the combustion chamber from the flue gas zone (4);
e) the burner head (41) is surrounded by an annular slag bath (49);
C. a conveyor device (11, 12) for moving refuse from one device to the other and to the dish burner (40).

2. A refuse incineration plant according to claim 1, characterised in that additional nozzles (43) for oxygen or oxygen-enriched air are disposed on the burner head (41) and/or the outer walls (46) of the dish burner (40).

3. A refuse incineration plant according to claim 1 or 2, characterised in that the outer wall (46) of the dish burner (40) is bevelled inwardly at the top (46a).

4. A refuse incineration plant according to any one of claims 1 to 3, characterised in that the heat exchanger (54, 86) is associated with a refrigerating machine (24) and/or a turbine (88).

5. A refuse incineration plant according to any one of claims 1 to 4, characterised in that the preheated air (90) flows through the heat exchanger (86) beforehand.

6. A refuse incineration plant according to claim 5, characterised in that a compressor (78) is disposed in front of, and a turbine (88) is disposed after, the heat exchanger (86).

7. A refuse incineration plant according to claim 6, characterised in that the turbine (88) is designed, inter alia, to operate the compressor (78).

8. A refuse incineration plant according to any one of claims 1 to 7, characterised in that the flue gas zone (4) and the raw refuse feed zone (1, 14) pass through one another as a refuse predrying stage (13), the flue gas being used as buffer gas.

9. A refuse incineration plant according to any one of claims 1 to 8, characterised in that a device (20, 62) is provided to separate steam and refuse gases.

10. A refuse incineration plant according to claim 9, characterised in that a cooling and vacuum generating device (20) is provided.

**Revendications**

1. Installation d'incinération de déchets avec recyclage de l'énergie obtenue, caractérisée par
A. un dispositif pour le préséchage et le dégazage (13, 20), par lequel tout d'abord est amenée de la chaleur et ensuite il est effectué un refroidissement et la production d'une dépression.
B. un brûleur à coque (40) présentant la structure suivante:
a) un conduit transporteur de déchets (36) pour déchets préséchés pénètre d'en bas dans le brûleurs à coque (40) et débouche
b) dans une tête de brûleur (41) en champignon qui possède pour supporter et assurer le transport des déchets en combustion formant un cône (73) une surface extérieure (44) conique en pente vers l'extérieur et vers le bas;
c) dans le voisinage de l'extrémité supérieure de la paroi extérieure (46) du brûleur à coque (40) il est prévu des buses (47) qui dirigent l'air (90) préchauffé tangentiellement et obliquement vers le bas pour former un tourbillon tournant autour du cône de déchets (73) dans le cœur duquel se forme une flamme de brûleur (74);
d) un échangeur de chaleur (54, 86) est disposé au-dessus de la flamme de brûleur (74) et sépare l'espace de combustion de la zone des gaz de fumée (4);
e) la tête de brûleur (41) est entourée par un bain de scories (49) en forme de couronne;
C. un dispositif de transport (11, 12) pour déplacer les déchets d'un dispositif à l'autre et au brûleur à coque (40).

2. Installation d'incinération de déchets suivant la revendication 1, caractérisée en ce que sont disposées à la tête de brûleur (41) et/ou sur les parois extérieures (46) du brûleur à coque (40) des buses supplémentaires (43) pour oxygène ou pour air enrichi à l'oxygène.

3. Installation d'incinération de déchets selon la revendication 1 ou 2, caractérisée en ce que la paroi extérieure (46) du brûleur à coque (40) présente sur sa face supérieure (46a) une forme en biseau vers l'intérieur.

4. Installation d'incinération de déchets selon une quelconque des revendications 1 à 3, caractérisée en ce que l'échangeur de chaleur (54, 86) est associé à une machine frigorifique (24) et/ou à une turbine (88).

5. Installation d'incinération de déchets selon une quelconque des revendications 1 à 4, caractérisée en ce que l'air préchauffé (90) passe auparavant dans l'échangeur de chaleur (86).

6. Installation d'incinération de déchets selon la revendication 5, caractérisée en ce qu'en amont de l'échangeur de chaleur (86) est monté un compresseur (78) et, en aval, une turbine (88).

7. Installation d'incinération de déchets selon la revendication 6, caractérisée en ce que la turbine (88) est prévue entre autres pour faire fonctionner le compresseur (78).

8. Installation d'incinération de déchets selon une quelconque des revendications 1 à 7, caractérisée en ce que la zone des gaz de fumée (4) et la zone d'arrivée des déchets bruts (1, 14) se pénètrent l'une l'autre pour former un étage de préséchage de déchets (11), les gaz de fumée étant utilisés comme gaz de protection.

9. Installation d'incinération de déchets selon une quelconque des revendications 1 à 8, caractérisée en ce qu'il est prévu un dispositif (20, 62) pour séparer la vapeur d'eau et les gaz de déchets.

10. Installation d'incinération de déchets selon la revendication 9, caractérisée en ce qu'il est prévu un dispositif de refroidissement et de production de dépression (20).

Fig. 1

Fig. 2